# EUROPÄISCHE PATENTSCHRIFT

(11) **EP 1 366 550 B1**
(45) Veröffentlichungstag und Bekanntmachung des Hinweises auf die Patenterteilung: **08.09.2004**
(21) Anmeldenummer: 02721989.8
(22) Anmeldetag: 02.03.2002
(51) Int. Cl.: H02G 9/04, H02G 9/02

(54) **KABELBRÜCKE**
CABLE CROSSOVER
COUVRE-CABLES

(30) Priorität: 06.03.2001 DE 10110568
(43) Veröffentlichungstag der Anmeldung: 03.12.2003
(73) Patentinhaber: Adam Hall Gmbh, 61267 Neu-Anspach (DE); Pletz, Guntram, 55776 Ruschberg (DE)
(72) Erfinder: PLETZ, Guntram, 55776 Ruschberg (DE)
(74) Vertreter: Gornott, Dietmar, Dipl.-Ing.
(86) Internationale Anmeldenummer: PCT/DE2002/000781
(87) Internationale Veröffentlichungsnummer: WO 2002/071566

(56) Entgegenhaltungen:
- DE-C- 19 707 689
- GB-A- 767 574
- US-A- 5 095 822
- US-A- 5 777 266

## Beschreibung

Die Erfindung betrifft eine Kabelbrücke mit mindestens einem Kabelkanal, der mit einem Deckel verschließbar ist, und mit zu beiden Seiten des mindestens einen Kabelkanals angeordneten Abschrägungen, wobei der Deckel auf der einen Seite mit Hilfe eines Scharniers mit der Kabelbrücke verbunden ist.

Kabelbrücken nach der Gattung des Hauptanspruchs werden häufig benötigt, um bei Veranstaltungen, wie beispielsweise Volksfesten und Musikdarbietungen, Unfälle durch auf dem Boden liegende Kabel zu vermeiden und die Kabel zu schützen. Dazu müssen diese Kabelbrücken von Personen- und Lastkraftwagen überfahrbar sein und von Fußgängern gefahrlos begangen werden können. Außerdem soll ihre Verlegung einfach, das heißt mit wenig Arbeitsaufwand verbunden, und trotzdem sicher sein.

Durch das deutsche Gebrauchsmuster 1 902 574 ist eine Schutzverkleidung bekanntgeworden. Dabei liegt bei einer Ausführungsform der bekannten Schutzverkleidung der Kabelkanal an der Unterseite, was das Verlegen des Kabels erschwert. Bei einer anderen Ausführungsform ist der Kabelkanal nach oben offen, wodurch das Kabel stärker gefährdet ist, beispielsweise durch möglicherweise scharfkantige zwischen die Wände des Kabelkanals und das Kabel eindringende Steine. Dieses wird bei einer durch das britische Patent 767,574 bekannten Kabelbrücke durch eine Abdeckung des Kabelkanals verhindert. Neben einer Abdeckplatte weist die Abdeckung einen stabilen Steg auf, der weit in den Kabelkanal eindringt und somit eine im Verhältnis zum Durchmesser des Kabels unnötige Höhe der Kabelbrücke zur Folge hat. Außerdem würde sich diese Konstruktion bei breiten für mehrere Kabel geeigneten Kabelkanälen auch nicht als stabil erweisen.

Aus Kosten- und Gewichtsgründen werden derartige Kabelbrücken in der Regel aus Kunststoff hergestellt. Bei diesen Kabelbrücken sind durch die hohe Belastung beim Überfahren von Kraftfahrzeugen insbesondere die Deckel der Kabelkanäle gefährdet.

Um dieses zu verhindern, wurde in DE 197 07 689 C1, welche als nächstliegender Stand der Technik angesehen wird, unter anderem vorgesehen, daß ein sich über die gesamte Länge der Kabelbrücke erstreckendes Scharnier als Gewebe-Scharnier ausgebildet ist. Diese Ausgestaltung des Scharniers hat sich zwar bewährt, ist jedoch insbesondere wegen des Einlegens des Gewebes relativ aufwendig herzustellen.

Aufgabe der vorliegenden Erfindung ist es, eine mit einem Deckel versehene Kabelbrücke mit geringerem Aufwand herstellen zu können, ohne daß die Anforderungen an die Brauchbarkeit und die Stabilität beim Überfahren der Kabelbrücke leiden. Diese Aufgabe wird erfindungsgemäß dadurch gelöst, daß das Scharnier aus abwechselnd an der Kabelbrücke angeformten ersten Scharnierelementen und an dem Deckel angeformten zweiten Scharnierelementen besteht und daß die ersten Scharnierelemente Öffnungen aufweisen, in die Bolzen eingreifen, die jeweils am benachbarten zweiten Scharnierelement angeformt sind.

Die erfindungsgemäße Kabelbrücke hat den Vorteil, daß die Teile, nämlich die Kabelbrücke selbst - im folgenden auch Basis genannt - und der Deckel jeweils aus einem Werkstoff gespritzt werden können. Gegenüber einer an sich denkbaren Ausführungsform, bei welcher das Scharnier in Form eines Klavierbandes ausgeführt ist, hat die erfindungsgemäße Kabelbrücke den Vorteil, daß eine durchgehende Scharnierachse, die beispielsweise brechen könnte, nicht vorhanden ist.

Eine Weiterbildung der Erfindung besteht darin, daß die Bolzen an ihren Stirnseiten derart abgeschrägt sind, daß die Bolzen an der bei geschlossenem Deckel unten liegenden Seite kürzer sind. Diese Weiterbildung ermöglicht ein einfaches Einsetzen des Deckels unter Ausnutzung der Elastizität der vorhandenen Werkstoffe.

Eine andere Weiterbildung der Erfindung besteht darin, daß an der an das Scharnier angrenzenden Seite des mindestens einen Kabelkanals eine Auflagefläche für den Deckel vorgesehen ist. Damit ist sichergestellt, daß das Scharnier auch bei hohen Belastungen der Kabelbrücke nicht beschädigt wird. Wenn bei dieser Weiterbildung zwischen der Auflagefläche und dem Scharnier in der Kabelbrücke eine paralell zum Scharnier verlaufende Nut vorgesehen ist, in die ein an den Deckel angeformter Riegel eingreift, ist das Scharnier zusätzlich gegen eine Überlastung in Querrichtung geschützt.

Ein noch besserer Schutz des Scharniers vor Überbeanspruchung kann gemäß einer anderen Weiterbildung dadurch erfolgen, daß die Öffnungen in den ersten Scharnierelementen nach unten gegenüber zur Aufnahme der Bolzen an sich erforderlichen runden Öffnungen erweitert sind.

Eine andere Weiterbildung der Erfindung ermöglicht eine einfache Demontage des Deckels dadurch, daß der Deckel und die zweiten Scharnierelemente derart geformt sind, daß bei Öffnen des Deckels über einen vorgegebenen Winkel die Bolzen unter Ausnutzung der abgeschrägten Stirnfläche aus den Öffnungen in den ersten Scharnierelementen herausgleiten.

Zu einer weiteren Stützung und Stabilisierung des Deckels bei hohen Belastungen trägt eine vorteilhafte Ausgestaltung der Erfindung dadurch bei, daß mehrere durch Wände getrennte Kabelkanäle vorgesehen sind und daß jeweils die Oberkanten der Wände bei geschlossenem Deckel von längs verlaufenden Rippen am Deckel eingefaßt werden.

Die Erfindung umfaßt ferner eine Kupplungsvorrichtung nach Anspruch 8 zum Verbinden von Kabelbrücken mit zu beiden Seiten mindestens eines Kabelkanals angeordneten Abschrägungen, bei welcher vorgesehen ist, daß Verbindungselemente klammerartig mit zwei ösenförmigen Schenkeln zur Verbindung mit der jeweils einen Kabelbrücke und mit einer an einem Steg befestigten Gelenkkugel zur Verbindung mit der jeweils anderen Kabelbrücke versehen sind.

Diese Ausgestaltung der Kupplungsvorrichtung trägt ebenfalls zu einer kostengünstigen Fertigung der Kabelbrücke bei. Außerdem kann eine mit der erfindungsgemäßen Kupplungsvorrichtung versehene Kabelbrücke verlegt und aufgehoben werden, ohne daß es dabei zu Verkantungen im Bereich der Kupplungsvorrichtungen kommt.

Die erfindungsgemäße Kupplungsvorrichtung kann dadurch weitergebildet werden, daß in einem Endbereich der Kabelbrücken jeweils neben den Kabelkanälen oben und unten Vertiefungen zur Aufnahme der ösenförmigen Schenkel vorgesehen sind und daß im anderen Endbereich eine Ausnehmung zur Aufnahme des Stegs und der Gelenkkugel vorgesehen ist.

Eine andere Weiterbildung der erfindungsgemäßen Kupplungsvorrichtung besteht darin, daß ein die beiden Schenkel des Verbindungsteils verbindendes Mittelteil im wesentlichen rechteckförmig an der Stirnseite der einen Kabelbrücke hervorsteht und daß an der gegenüberliegenden Stirnseite der anderen Kabelbrücke eine korrespondierende weitere Ausnehmnung vorgesehen ist.

Diese Weiterbildung ermöglicht eine starre Verbindung der verlegten Kabelbrücken, wobei insbesondere Querkräfte abgefangen werden, ohne die Stege und die Gelenkkugel zu belasten.

Ausführungsbeispiele der Erfindung sind in der Zeichnung anhand mehrerer Figuren dargestellt und in der nachfolgenden Beschreibung näher erläutert. Es zeigt:
- Fig. 1: einen Abschnitt einer erfindungsgemäßen Kabelbrücke mit geöffnetem Deckel,
- Fig. 2: einen Abschnitt einer erfindungsgemäßen Kabelbrücke mit geschlossenem Deckel,
- Fig. 3: einen Abschnitt einer erfindungsgemäßen Kabelbrücke mit Kupplungsvorrichtungen,
- Fig. 4: ein erfindungsgemäßes Verbindungsteil,

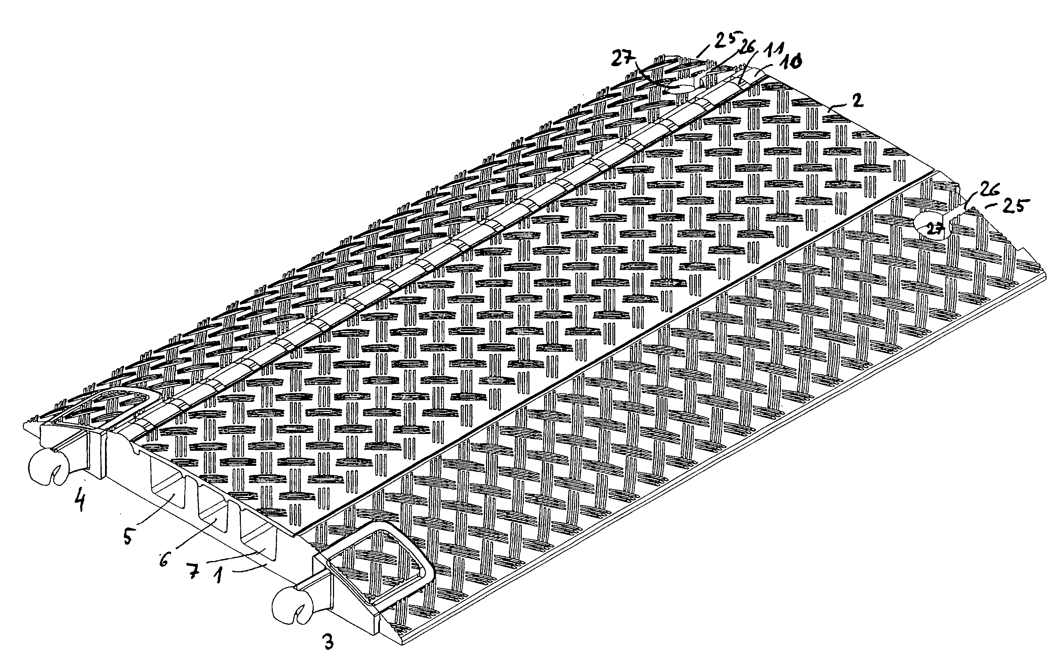

- Fig. 5: eine komplette erfindungsgemäße Kabelbrücke und
- Fig. 6: ein Detail des Scharniers in geschnittener Darstellung.

Gleiche Teile sind in den Figuren mit gleichen Bezugszeichen versehen.

Die in den Figuren dargestellte Kabelbrücke besteht aus einer Basis 1, einem Deckel 2 und Verbindungselementen 3, 4. Die Basis 1 enthält drei Kabelkanäle 5, 6, 7, die durch Wände 8, 9 getrennt sind. Jeweils zu beiden Seiten der Wände 8, 9 verlaufen am Deckel 2 Rippen 19. Die Basis 1 und der Deckel 2 sind mit einem Anti-Rutsch-Profil versehen.

Der Deckel 2 ist mit der Basis 1 über ein sich über die ganze Länge der Kabelbrücke erstreckendes Scharnier verbunden, das aus einer Reihe von ersten Scharnierelementen 10 und einer Reihe von zweiten Scharnierelementen 11 gebildet wird, die jeweils an der Basis 1 bzw. am Deckel 2 angeformt sind. Die am Deckel 2 angeformten Scharnierelemente 11 weisen Bolzen 12 auf, deren Stirnflächen abgeschrägt sind. Die Abschrägung ermöglicht eine Montage sowie eine Demontage des Deckels in einfacher Weise.

Zur Montage wird der Deckel in der Schließstellung auf die Basis 1 aufgelegt und auf der Seite des Scharniers auf die Basis gepreßt. Die abgeschrägten Bolzen ermöglichen dann ein Eindringen der Scharnierelemente 11 des Deckels in die Schlitze 14 zwischen den Scharnierelementen 10 der Basis, bis die Bolzen 12 in den Öffnungen 13 gelagert sind. Der montierte Deckel 2 kann dann leicht aufgeklappt werden. Wird er über eine Öffnungsstellung hinaus weiter geschwenkt, stützt sich die Kante 15 des Deckels auf der Basis auf und die Bolzen 12 werden aus den Schlitzen 14 herausgehebelt.

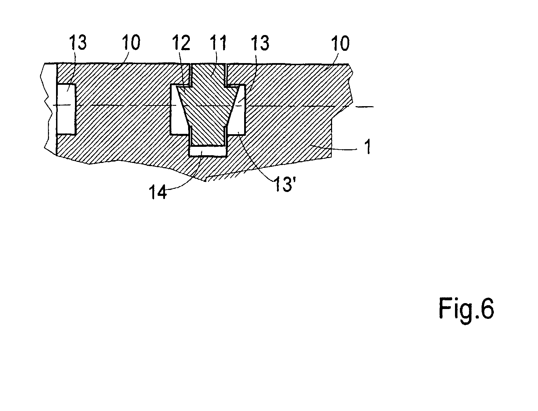

Im geschlossenem Zustand des Deckels liegt dieser im Bereich des Scharniers auf einer Auflagefläche 16 und mit einem sich längs des Deckels erstreckenden Riegel 17 in einer Nut 18 auf. Ferner sind die Öffnungen 13 nach unten hin (13', Fig. 6) erweitert, so daß die Elemente des Scharniers entlastet sind.

An der dem Scharnier gegenüberliegenden Längsseite des Deckels 2 sind Verschlüsse angeordnet, von denen in den Figuren nur einer sichtbar ist. Diese bestehen jeweils aus einer Ausnehmung 21 in der Basis 1, die zum Kabelkanal 7 hin offen ist und an den Seiten Hinterschneidungen 22 aufweist. Das am Deckel befindliche Gegenstück 23 rastet in der Ausnehmung 21 ein, kann sich jedoch in Richtung auf den Kabelkanal 7 frei bewegen. Damit wird erzielt, daß durch Belastungen hervorgerufene Verformungen des Deckels 2 und gegebenenfalls auch der Basis 1 nicht zu einer Belastung der Verschlüsse 21, 22, 23 führt.

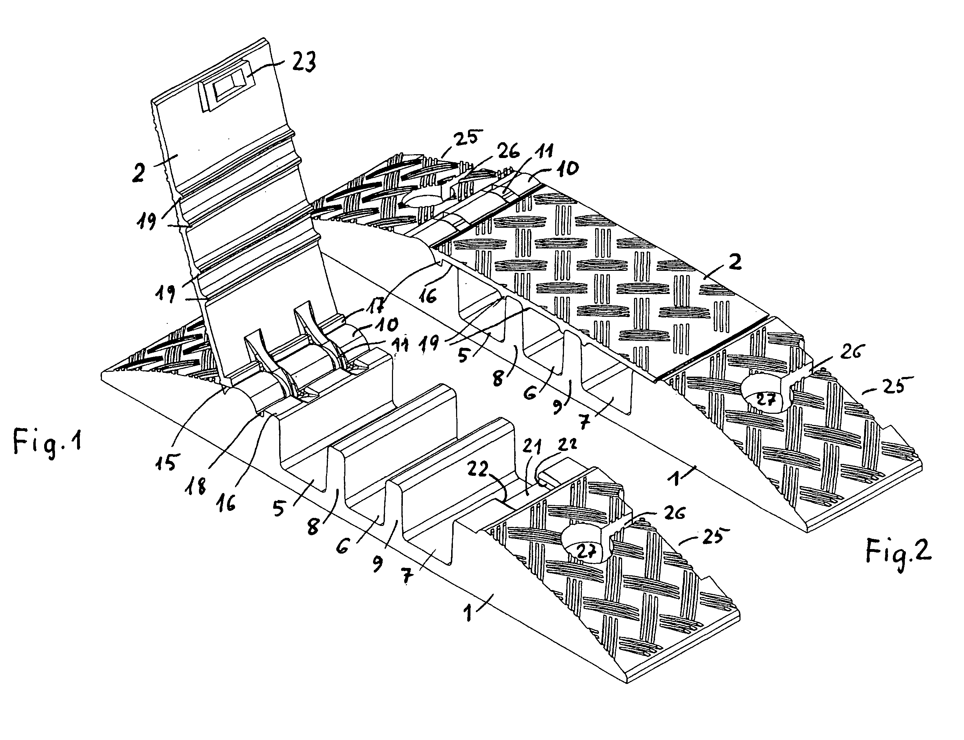

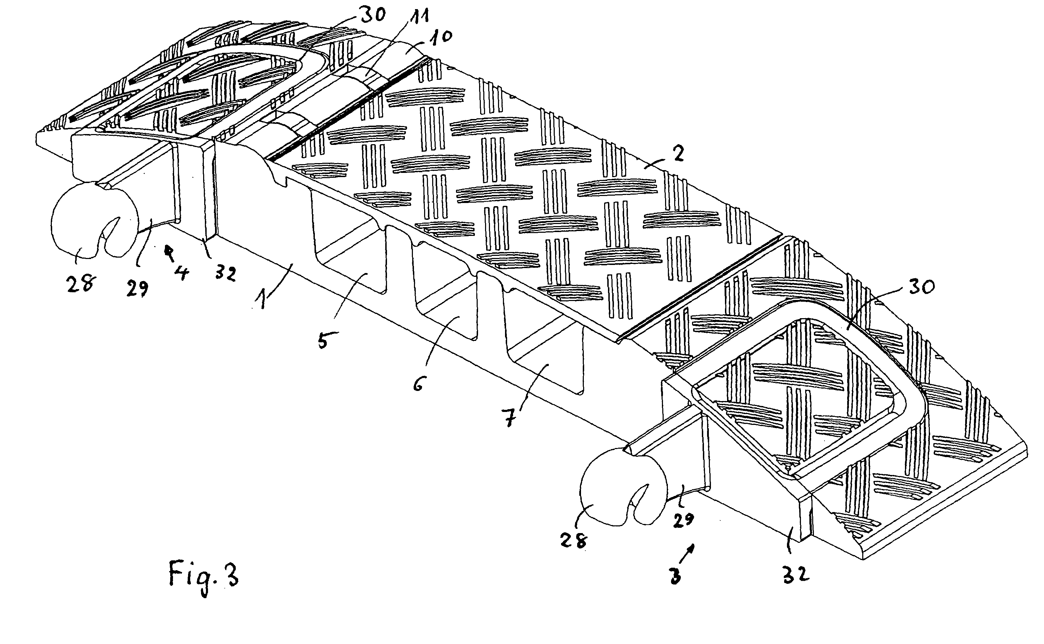

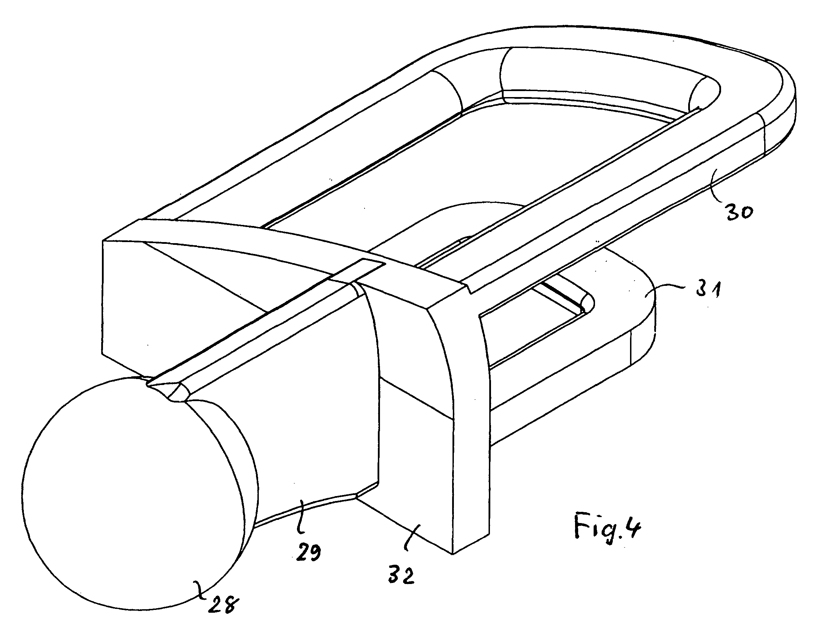

Zum Verbinden zweier Kabelbrücken befindet sich an dem in den Figuren 1 und 2 gezeigten Ende der Kabelbrücke jeweils auf einer Seite eine Ausnehmung 25, eine Nut 26 und daran anschließend eine runde Vertiefung 27 mit einem etwa halbkugelförmigen Boden. In diese Vertiefung greift eine Gelenkkugel 28 eines Verbindungselementes 4 ein, das an der anderen Stirnseite der Kabelbrücke paarweise angeordnet ist. Die Verbindungselemente 3, 4 (Fig. 3) sind klammerartig mit zwei ösenförmigen Schenkeln 30, 31 (Fig. 4) versehen, die in entsprechende Nuten der Seitenbereiche der Basis 1 eingesetzt werden, so daß sie mit der Oberfläche der Basis 1 etwa eine Ebene bilden. Ein die beiden Schenkel verbindendes Mittelteil 32 ragt aus der Stirnseite der Kabelbrücke heraus und greift in die Ausnehmung 25 ein. Damit werden Querkräfte von einer auf die andere Kabelbrücke ohne besondere Belastung des Steges 29 und der Gelenkkugel 28 übertragen.

## Patentansprüche

1. Kabelbrücke mit mindestens einem Kabelkanal (5, 6, 7), der mit einem Deckel (2) verschließbar ist, und mit zu beiden Seiten des mindestens einen Kabelkanals (5, 6, 7) angeordneten Abschrägungen, wobei der Deckel (2) auf der einen Seite mit Hilfe eines Scharniers mit der Kabelbrücke (1) verbunden ist, **dadurch gekennzeichnet, daß** das Scharnier aus abwechselnd an der Kabelbrücke (1) angeformten ersten Scharnierelementen (10) und an dem Deckel (2) angeformten zweiten Scharnierelementen (11) besteht und daß die ersten Scharnierelemente (10) Öffnungen (13) aufweisen, in die Bolzen (12) eingreifen, die jeweils am benachbarten zweiten Scharnierelement (11) angeformt sind.

2. Kabelbrücke nach Anspruch 1, **dadurch gekennzeichnet, daß** die Bolzen (12) an ihren Stirnseiten derart abgeschrägt sind, daß die Bolzen (12) an der bei geschlossenem Deckel (2) unten liegenden Seite kürzer sind.

3. Kabelbrücke nach Anspruch 2, **dadurch gekennzeichnet, daß** an der an das Scharnier angrenzenden Seite des mindestens einen Kabelkanals (5) eine Auflagefläche (16) für den Deckel (2) vorgesehen ist.

4. Kabelbrücke nach Anspruch 3, **dadurch gekennzeichnet, daß** zwischen der Auflagefläche (16) und dem Scharnier in der Kabelbrücke (1) eine paralell zum Scharnier verlaufende Nut (18) vorgesehen ist, in die ein an den Deckel angeformter Riegel (17) eingreift.

5. Kabelbrücke nach einem der Ansprüche 1 bis 4, **dadurch gekennzeichnet, daß** die Öffnungen in den ersten Scharnierelementen (10) nach unten gegenüber zur Aufnahme der Bolzen (12) an sich erforderlichen runden Öffnungen erweitert sind.

6. Kabelbrücke nach einem der Ansprüche 2 bis 5, **dadurch gekennzeichnet, daß** der Deckel (2) und die zweiten Scharnierelemente (11) derart geformt sind, daß bei Öffnen des Deckels (2) über einen vorgegebenen Winkel die Bolzen (12) unter Ausnutzung der abgeschrägten Stirnfläche aus den Öffnungen (13) in den ersten Scharnierelementen (10) herausgleiten.

7. Kabelbrücke nach einem der Ansprüche 1 bis 6, **dadurch gekennzeichnet, daß** mehrere durch Wände (8, 9) getrennte Kabelkanäle (5, 6, 7) vorgesehen sind und daß jeweils die Oberkanten der Wände (8, 9) bei geschlossenem Deckel (2) von längs verlaufenden Rippen (19) am Deckel eingefaßt werden.

8. Kupplungsvorrichtung zum Verbinden von Kabelbrücken (1) nach einem der Ansprüche 1 bis 7, **dadurch gekennzeichnet, daß** Verbindungselemente (3, 4) klammerartig mit zwei ösenförmigen Schenkeln (30, 31) zur Verbindung mit der jeweils einen Kabelbrücke (1) und mit einer an einem Steg (29) befestigten Gelenkkugel (28) zur Verbindung mit der jeweils anderen Kabelbrücke (1) versehen sind.

9. Kupplungsvorrichtung nach Anspruch 8, **dadurch gekennzeichnet, daß** in einem Endbereich der Kabelbrücken jeweils neben den Kabelkanälen oben und unten Vertiefungen zur Aufnahme der ösenförmigen Schenkel (30, 31) vorgesehen sind und daß im anderen Endbereich eine Ausnehmung (26, 27) zur Aufnahme des Stegs (29) und der Gelenkkugel (28) vorgesehen ist.

10. Kupplungsvorrichtung nach einem der Ansprüche 8 oder 9, **dadurch gekennzeichnet, daß** ein die beiden Schenkel (30, 31) des Verbindungsteils (3, 4) verbindendes Mittelteil (32) im wesentlichen rechteckförmig an der Stirnseite der einen Kabelbrücke (1) hervorsteht und daß an der gegenüberliegenden Stirnseite der anderen Kabelbrücke eine korrespondierende weitere Ausnehmnung (25) vorgesehen ist.

## Claims

1. Cable crossover with at least one cable channel (5, 6, 7) closable with a cover (2) and bevels arranged on either side of the at least one cable channel (5, 6, 7), whereby the cover (2) is linked to the cable crossover (1) on one side with the aid of a hinge, **characterised in that** the hinge comprises first hinge elements (10) formed on the cable crossover (1) and second hinge elements (11) formed on the cover (2) in alternating fashion and that the first hinge elements (10) have openings (13) in which bolts (12) engage that are respectively formed on the adjoining second hinge element (11).

2. Cable crossover according to Claim 1, **characterised in that** the bolts (12) are chamfered on their end faces such that the bolts (12) are shorter on the side lying underneath with the cover (2) closed.

3. Cable crossover according to Claim 2, **characterised in that** on the side of the at least one cable channel (5) adjoining the hinge, a support surface (16) for the cover (2) is provided.

4. Cable crossover according to Claim 3, **characterised in that** between the support surface (16) and the hinge, in the cable crossover (1) a groove (18) running parallel to the hinge is provided, in which groove a bar (17) formed onto the cover engages.

5. Cable crossover according to one of the claims 1 to 4, **characterised in that** the openings in the first hinge elements (10) are extended downwards opposed to round openings required for accommodating the bolts (12).

6. Cable crossover according to one of the claims 2 to 5, **characterised in that** the cover (2) and the second hinge elements (11) are formed such that on opening the cover (2) beyond a predetermined angle, the bolts (12) slide out of the openings (13) in the first hinge elements (10) utilising the chamfered end face.

7. Cable crossover according to one of the claims 1 to 6, **characterised in that** a plurality of cable channels (5, 6, 7) separated by walls (8, 9) are provided and that, with the cover (2) closed, the upper edges of each of the walls (8, 9) are grasped by ribs (19) running longitudinally on the cover.

8. Coupling device for joining cable crossovers (1) according to one of the claims 1 to 7, **characterised in that** connecting elements (3, 4) are provided in clamp fashion with two eye-shaped limbs (30, 31) for connecting with the one respective cable crossover (1) and with a joint ball (28) attached to a web (29) for connecting to the respective other cable crossover (1).

9. Coupling device according to Claim 8, **characterised in that** in an end region of the cable crossovers adjoining each of the cable channels above and below indentations are provided for accommodating the eye-shaped limbs (30, 31) and that in the other end region a recess (26, 27) for accommodating the web (29) and the joint ball (28) is provided.

10. Coupling device according to one of the claims 8 or 9, **characterised in that** a central member (32) connecting the two limbs (30, 31) of the connecting member (3, 4) stands out substantially rectangular shaped on the end face of the one cable crossover (1) and that on the opposing end face of the other cable crossover, a corresponding further recess (25) is provided.

## Revendications

1. Couvre-câble comprenant au moins un canal de câble (5, 6, 7) qui peut être fermé au moyen d'un couvercle (2) et présentant des chanfreins disposés des deux côtés de l'au moins un canal de câble (5, 6, 7), le couvercle (2) étant relié au couvre-câble (1) sur un côté au moyen d'une charnière,
**caractérisé en ce que**
la charnière est composée, en alternance, de premiers éléments de charnière (10) formés sur le couvre-câble (1) et de seconds éléments de charnière (11) formés sur le couvercle (2), et les premiers éléments de charnière (10) présentent des ouvertures (13) dans lesquelles s'engagent des tétons (12) formés chacun sur le second élément de charnière adjacent.

2. Couvre-câble selon la revendication 1,
**caractérisé en ce que**
les tétons (12) sont chanfreinés au niveau de leurs côtés frontaux de telle manière que les tétons (12) soient plus courts sur le côté qui se trouve en bas lorsque le couvercle est fermé.

3. Couvre-câble selon la revendication 2,
**caractérisé en ce que**
sur le côté de l'au moins un canal de câble (5) adjacent à la charnière, est prévue une surface d'appui (36) pour le couvercle (2).

4. Couvre-câble selon la revendication 3,
**caractérisé en ce que**
entre la surface d'appui (16) et la charnière, il est prévu dans le couvre-câble (1) une rainure (18) s'étendant parallèlement à la charnière et dans laquelle s'engage un verrou (17) venu de matière avec le couvercle.

5. Couvre-câble selon une des revendications 1 à 4,
**caractérisé en ce que**
les ouvertures formées dans les premiers éléments de charnière (10) sont élargies vers le bas par rapport à des ouvertures rondes, nécessaires en soi pour la réception des tétons (12) ;

6. Couvre-câble selon une des revendications 2 à 5,
**caractérisé en ce que**
le couvercle (2) et les deuxièmes éléments de charnière (11) sont formés de manière que, lorsqu'on ouvre le couvercle (2) au-delà d'un angle prédéterminé, les tétons (12) glissent hors des ouvertures (13) formées dans les premiers éléments de charnière (10) grâce à la surface frontale chanfreinée.

7. Couvre-câble selon une des revendications 1 à 6,
**caractérisé en ce qu'**
il est prévu plusieurs canaux de câbles (5, 6, 7) séparés par des cloisons (8, 9) et lorsque le couvercle est fermé, les bords supérieurs des cloisons (8, 9) sont emboîtés par des nervures (19) longitudinales prévues sur le couvercle

8. Dispositif d'accouplement pour l'assemblage de couvre-câbles (1) selon une des revendications 1 à 7
**caractérisé en ce que**
des éléments d'assemblage (3, 4) du type crampon sont munis de deux branches en forme d'oeillet (30, 31) pour s'assembler à un couvre-câble (1) et d'une rotule d'articulation (28) fixée à une ailette (29) pour s'assembler avec l'autre couvre-câble (1).

9. Dispositif d'accouplement selon la revendication 8,
**caractérisé en ce que**
dans une région terminale des couvre-câbles sont prévus, à côté des canaux de câble, en haut et en bas, des évidements destinés à recevoir les branches (30, 31) en forme d'oeillet et, dans l'autre région terminale, est prévu un évidement (26, 27) destiné à recevoir l'ailette (29) et la rotule d'articulation (28).

10. Dispositif d'accouplement selon une des revendications 8 ou 9,
**caractérisé en ce qu'**
une partie centrale (32) qui relie les deux branches (30, 31) de l'élément d'assemblage (3, 4) fait saillie sensiblement en forme de rectangle au droit de la surface frontale de l'un des couvre-câble (1), et sur le côté frontal opposé de l'autre couvre-câble, est prévu un autre évidement (25) qui lui correspond.
